# EUROPÄISCHE PATENTSCHRIFT

(11) **EP 0 343 413 B1**
(45) Veröffentlichungstag und Bekanntmachung des Hinweises auf die Patenterteilung: **20.01.1993**
(21) Anmeldenummer: 89108176.2
(22) Anmeldetag: 05.05.1989
(51) Int. Cl.: B29C 47/08, B08B 7/00

(54) **Vorrichtung zum Reinigen solcher Teile von Kunststoffverarbeitungsmaschinen, an denen Kunststoffreste anhaften**
Apparatus for cleaning elements of plastics processing machines on which plastic has stuck
Dispositif de nettoyage d'éléments de machines de traitement des matières plastiques sur lesquelles adhèrent des restes de matière plastique

(30) Priorität: 27.05.1988 DE 3818144
(43) Veröffentlichungstag der Anmeldung: 29.11.1989
(73) Patentinhaber: Caroline Christ, abgasfreie Werkzeugreinigungsapparate für die Kunststoffindustrie, D-80687 München (DE)
(72) Erfinder: Schmidt, Rudolf, D-8000 München 21 (DE)
(74) Vertreter: Prietsch, Reiner, Dipl.-Ing.

(56) Entgegenhaltungen:
- DD-A- 77 387
- DE-C- 3 309 878
- DE-C- 3 712 640
- DE-U- 7 820 264
- US-A- 3 319 638

## Beschreibung

Die Erfindung betrifft eine Vorrichtung der im Oberbegriff des Patentanspruches 1 angegebenen Art.

Eine derartige Vorrichtung ist aus der DE-PS 37 12 640 bekannt. Das mit ihr verwirklichte Reinigungsprinzip hat den Vorteil, daß im Regelfall und bei bestimmungsgemäßem Gebrauch der Kunststoff nicht zersetzt wird, so daß keine toxischen oder sonst die Umwelt schädigenden Gase entstehen, die eine stationäre Aufstellung der Vorrichtung und ihre Verbindung mit einem entsprechenden Abzugsystem notwendig machen würden. Als das Wärmeträgermedium in Bewegung versetzende und dadurch die Reinigungswirkung unterstützende Vorrichtung dient ein Druckluftvibrator, der in den auf dem Deckel des Behälters angeordneten Abluftfilter integriert ist und über einen in das Wärmeträgermedium eintauchenden Teller dieses in Schwingungen versetzt. Der Behälter ist des weiteren mit einem Auffangbehälter über einen Überlauf verbunden.

Insbesondere wenn die bekannte Vorrichtung mit einem Behandlungsbehälter großen Volumens ausgestattet ist, nimmt das Aufheizen des Wärmeträgermediums wie auch ggf. dessen Abkühlung eine beträchtliche Zeit in Anspruch. Eine Verkürzung der Aufheizzeit durch Erhöhung der Heizleistung ist nur in sehr begrenztem Umfang möglich, da es leicht zu örtlichen Überhitzungen und damit einhergehenden Zersetzungserscheinungen des Wärmeträgermediums kommen kann. Ein weiterer Nachteil der bekannten Vorrichtung besteht darin, daß das nicht unerhebliche Luftvolumen oberhalb des Flüssigkeitsspiegels bei den bis zu 400°C betragenden Temperaturen einen Teil des Wärmeträgermediums und fallweise auch der abgereinigten Kunststoffreste durch Oxydation zersetzt, uzw. umso mehr, je länger die Aufheizung, die eigentliche Reinigung und die Abkühlung dauern.

Der Erfindung liegt daher die Aufgabe zugrunde, eine Vorrichtung der einleitend angegebenen Gattung zu schaffen, die eine verkürzte Aufheizzeit, eine kürzere Reinigungsdauer und zutreffendenfalls auch eine verkürzte Kühlzeit hat.

Diese Aufgabe ist durch die im kennzeichnenden Teil des Patentanspruches 1 angegebenen Merkmale gelöst.

Aus dem DE-GM 78 20 264 ist ein Behälter zur Reinigung von Metallteilen mittels einer Reinigungsflüssigkeit bekannt. Der Behälter enthält eine Flügelradpumpe in einer rohrförmigen Pumpenkammer, deren Achse parallel zur Mittelachse der Behandlungskammer verläuft und die mit der Behandlungskammer über einen oberen Kanal und einen unteren Kanal verbunden ist. Durch die Flügelradpumpe und zusätzliche Leitbleche wird die Reinigungsflüssigkeit auf eine sehr hohe Strömungsgeschwindigkeit von bis zu 40 m/s gebracht, um die Reinigung durch mechanisches Bespülen der Metallteile zu verbessern. Hingegen stellen sich bei dem bekannten Reinigungsbehälter das oben genannte Zersetzungsproblem und die daraus resultierende Aufgabe der vorliegenden Erfindung nicht. Umgekehrt trägt die hier vorgeschlagene Umwälzung des Wärmeträgermediums - für sich betrachtet - weder zu einer Verkürzung der Reinigungszeit noch zu einer Verbesserung des Reinigungsergebnisses bei. Grund hierfür ist, daß die Reinigung weder auf mechanischem noch auf physikalisch/chemischen Wege, d.h. dadurch, daß die Kunststoffreste in dem Wärmeträgermedium in Lösung gehen, erreicht wird. Vielmehr beruht die Reinigungswirkung auf dem rein physikalischen Prozess der Verflüssigung der Kunststoffreste. Hierbei wird durch die Umwälzung des Wärmeträgermediums dessen örtliche Überhitzung vermieden. Dies ermöglicht die Installation einer höheren Heizleistung und die Regelung auf eine höhere Reinigungstemperatur. Dies führt zu einer Verkürzung sowohl der Aufheizzeit als auch der Reinigungszeit und schließlich der Kühlzeit. Neben einer beträchtlichen Verkürzung der Dauer eines Reinigungszyklus wird im Zusammenwirken mit der ebenfalls vorgeschlagenen Verdrängung des Luftsauerstoffes durch eine Inertgasspülung die Zersetzung des Wärmeträgermediums und gegebenenfalls der abgereinigten Kunststoffreste erheblich verringert, also die Nutzungsdauer des Wärmeträgermediums wesentlich verlängert und die Entstehung von umweltschädlichen Zersetzungsprodukten hintangehalten.

Eine bevorzugte weil konstruktiv einfache und wirksame Ausführungsform der Vorrichtung nach der Erfindung ist im Anspruch 2 angegeben.

Da an die Pumpe keine besonderen Anforderungen gestellt werden, genügt die in Anspruch 3 genannte Ausführung als Flügelradpumpe.

Gemäß Anspruch 4 kann der Pumpenmotor außerhalb des Behandlungsbehälters angeordnet sein, braucht also weder gekapselt noch besonders hitzeunempfindlich zu sein.

Die Ausführungsform nach Anspruch 5 vermeidet unnötige Wärmeverluste.

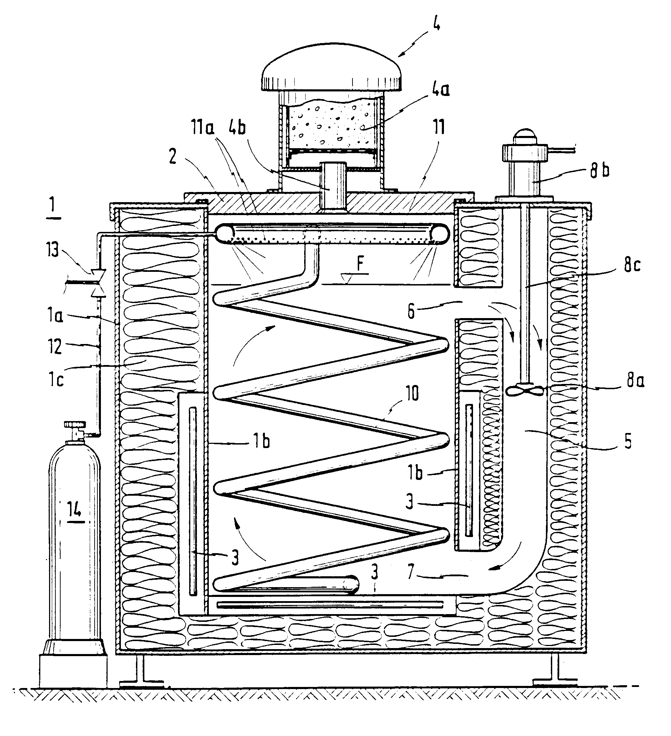

In der Zeichnung ist die Vorrichtung nach der Erfindung in einer beispielhaft gewählten Ausführungsform schematisch vereinfacht im Schnitt dargestellt. Teile, die in keinem Zusammenhang mit der Erfindung stehen, sind weggelassen, so etwa die Mechanik zum Öffnen und dichten Verschließen des Behälterdeckels, der eingangs bereits erwähnte Auffangbehälter und der zugehörige Überlauf in dem Behandlungsbehälter, sowie die Heiz- und Kühlanschlüsse.

Die Vorrichtung umfaßt einen doppelwandigen Behälter 1, der durch einen Deckel 2 dicht verschlossen ist. Zwischen der äußeren Behälterwand 1a und der inneren Behälterwand 1b befindet sich eine Wärmeisolierung 1c. Nahe der inneren Behälterwand 1b, zu der auch der Behälterboden gezählt wird, sind geeignete elektrische Heizstäbe 3 angebracht, deren elektrische Verbindungsleitungen nicht dargestellt sind. Auf dem Deckel 2 befindet sich ein rohrförmiger Aufsatz 4, der einen Filter, z. B. einen Aktivkohlefilter 4a enthält, der über einen Rohrstutzen 4b mit dem Innenraum des Behandlungsbehälters 1 in Verbindung steht.

Dieser Innenraum ist mit einem hier nicht dargestellten, flüssigen Wärmeträgermedium gefüllt, das sich durch die elektrische Heizvorrichtung 3 bis auf eine vorgewählte Temperatur erhitzen läßt, die bis zu rund 400° C betragen kann. In dieses Wärmeträgermedium werden nach Abheben des Deckels 2 diejenigen Teile von Kunststoffverarbeitungsmaschinen, beispielsweise Extruderschnecken, Spritzköpfe, Angußverteiler und dergleichen eingelegt, an denen Kunststoffreste anhaften. Der Behandlungsbehälter 1 kann hierzu einen korbartigen Einsatz haben (nicht dargestellt).

Oberhalb des Flüssigkeitsspiegels F des Wärmeträgermediums ist in dem Behälter 1 eine Ringleitung 11 angeordnet, die eine Anzahl von vorzugsweise schräg auf die Mittelachse des Behälters 1 gerichteten Löchern 11a hat. Die Ringleitung 11 ist über eine Leitung 12, die mit einem Ventil 13 ausgestattet ist, mit einer Stickstofflasche 14 verbunden.

Nach dem Verschließen des Deckels 2 wird das Ventil 13 - vorzugsweise selbsttätig über eine nicht dargestellte Ablaufsteuerung - kurzzeitig geöffnet. Der dann über die Löcher 11a ausströmende Stickstoff verdrängt die Luft oberhalb des Flüssigkeitsspiegels F. Die Luft entweicht über den Rohrstutzen 4b und den Aktivkohlefilter 4a in dem auf dem Deckel 2 angeordneten Aufsatz 4.

Gleichzeitig oder anschließend wird das Wärmeträgermedium mittels der Heizvorrichtung 3 auf die voreingestellte Temperatur erhitzt, die nicht allzu weit über der Schmelztempteratur des an den zu reinigenden Teilen haftenden Kunststoffs liegt, damit dessen Zersetzung möglichst vermieden wird, zumal hierbei auch gasförmige Produkte entstehen können. Der abgereinigte Kunststoff schwimmt gewöhnlich auf und sammelt sich dann auf der Oberfläche des Wärmeträgermediums.

Zur Beschleunigung des Aufheizvorganges wie auch des eigentlichen Reinigungsvorganges ist an einer Stelle des Behälters zwischen die äußere Behälterwand 1a und die innere Behälterwand 1b die dargestellte, rohrförmige Pumpenkammer 5 eingearbeitet, die über einen oberen Kanal 6 und einen unteren Kanal 7 mit dem Innenraum des Behälters 1 in Verbindung steht, also ebenfalls mit dem Wärmeträgermedium gefüllt ist, dessen oberer Füllstand zweckmäßig so bemessen ist, daß er oberhalb des oberen Kanales 6, z. B. bei der Marke F liegt. In die Pumpenkammer 5 taucht das Flügelrad 8a einer Pumpe ein, deren Antriebsmotor, z. B ein Elektromotor 8b, sich außerhalb des Behälters 1 befindet und mit dem Flügelrad 8a über eine Welle 8c entsprechender Länge verbunden ist.

Über eine entsprechende elektrische Steuerung ist sichergestellt, daß die Heizeinrichtung 3 stets nur zusammen mit dem Pumpenmotor 8b eingeschaltet werden kann. Der durch das Flügelrad 8a erzeugte und vorzugsweise in Richtung der eingezeichneten Pfeile laufende Flüssigkeitsstrom sorgt nicht nur für eine gleichmäßige und daher rasche Erwärmung des Wärmeträgermediums ohne die Gefahr lokaler Überhitzungen, sondern umspült auch die in das Behälterinnere eingelegten, zu reinigenden Teile, wobei sich gezeigt hat, daß auch bei verhältnismäßig geringer Strömungsgeschwindigkeit die Reinigungswirkung besser ist als bei einer vergleichbaren Vorrichtung nach dem Stand der Technik, bei der das Wärmeträgermedium mittels einer elektromagnetischen oder pneumatischen Vorrichtung in Schwingungen versetzt wird.

Um nach erfolgter Reinigung die Abkühlung zu beschleunigen, ist im Inneren des Behandlungsbehälters 1 ein schraubenförmig verlaufendes Kühlrohr 10 angeordnet, das mit einem Kühlmedium, am einfachsten mit Wasser, gespeist wird. Auch die Abkühlzeit verkürzt sich naturgemäß, wenn währenddessen der Pumpenmotor 8b eingeschaltet bleibt.

Wir bereits erwähnt, sind in der Zeichnung nur die für das Verständnis der Erfindung wesentlichen Teile dargestellt. Unter anderem ist in der Praxis häufig der Deckel 2 ebenfalls wärmeisolierend ausgebildet. Weiter sind im Inneren des Behandlungsbehälters 1 Abweisbleche, Führungsschienen oder dergleichen vorgesehen, die verhindern, daß die zu reinigenden Teile oder der diese enthaltende Korb in direkte Berührung mit der inneren Behälterwand 1b oder mit dem Kühlrohr 10 kommen, so daß Beschädigungen der betreffenden Teile vermieden werden.

## Patentansprüche

1. Vorrichtung zum Reinigen solcher Teile von Kunststoffverarbeitungsmaschinen an denen Kunststoffreste anhaften, bestehend aus einem die Teile in einer Behandlungskammer aufnehmenden Behandlungsbehälter (1) mit einem Deckel (2), der einen mit dem Inneren des Behälters (1) verbundenen Aktivkohleabluftfilter (4) trägt und mit einer Heizvorrichtung (3), die ein flüssiges Wärmeträgermedium in der Behandlungskammer auf eine über der Schmelztemperatur des an den zu reinigenden Teilen haftenden Kunststoffs liegende Temperatur erhitzt, sowie mit einer das Wärmeträgermedium in Bewegung versetzenden Vorrichtung, dadurch gekennzeichnet, daß die Vorrichtung aus einer Pumpe (8a, 8b, 8c) besteht, deren Saugseite (bei 6) mit der Behandlungskammer nahe des oberen Füllstandes (F) des Wärmeträgermediums verbunden ist und deren Druckseite (bei 7) mit der Behandlungskammer nahe dere Bodens verbunden ist und daß in dem Behälter (1) oberhalb des oberen Füllstandes (F) des Wärmeträgermediums eine Ringleitung (11) angeordnet ist, die mit mehreren, auf die Mittelachse des Behälters (1) gerichteten Löchern (11a) versehen sowie über ein Ventil (13) mit einer Inertgasquelle (14) verbunden ist.

2. Vorrichtung nach Anspruch 1, dadurch gekennzeichnet, daß die Pumpe in einer rohrförmigen Pumpenkammer (5) angeordnet ist, deren Achse parallel zu der Mittelachse der Behandlungskammer verläuft und die mit der Behandlungskammer über einen oberen Kanal (6) und einen unteren Kanal (7) verbunden ist.

3. Vorrichtung nach Anspruch 1 oder 2, dadurch gekennzeichnet, daß das Pumporgan der Pumpe ein Flügelrad (8a) ist.

4. Vorrichtung nach Anspruch 3, dadurch gekennzeichnet, daß der Pumpenmotor (8b) außerhalb des Behälters (1) angeordnet ist.

5. Vorrichtung nach einem der Ansprüche 2 bis 4, dadurch gekennzeichnet, daß die Wärmeisolation (1c) des Behälters (1) auch die rohrförmige Pumpenkammer (5) umschließt.

## Claims

1. An apparatus for cleaning those parts of synthetic plastics processing machinery on which synthetic plastics residues cling, the apparatus consisting of a processing tank (1) which receives the parts in a processing chamber and having a cover (2) which carries an activated charcoal waste air filter (4) which is connected to the interior of the tank (1) and with a heating means (3) which heats a liquid heat carrier medium in the processing chamber to a temperature which is above the melting temperature of the synthetic plastics material clinging to the parts which are to be cleaned, and with a device which imparts motion to the heat carrier medium, characterised in that the apparatus consists of a pump (8a, 8b, 8c) the intake side (at 6) of which is connected to the processing chamber close to the top filling level (F) of the heat carrier medium and of which the output side (at 7) is connected to the processing chamber close to its bottom and in that there is in the tank (1) above the upper filling level (F) of heat carrier medium a ring pipe (11) provided with a plurality of holes (11a) directed at the central axis of the container (1) and which is connected by a valve (13) to an inert gas source (14).

2. An apparatus according to claim 1, characterised in that the pump is disposed in a tubular pump chamber (5) the axis of which extends parallel with the central axis through the processing chamber and which is connected to the processing chamber via an upper passage (6) and a lower passage (7).

3. An apparatus according to claim 1 or 2, characterised in that the pump member of the pump is an impeller (8a).

4. An apparatus according to claim 3, characterised in that the pump motor (8b) is disposed outside the tank (1).

5. An apparatus according to one of claims 2 to 4, characterised in that the heat insulation (1c) of the container (1) also encloses the tubular pump chamber (5).

## Revendications

1. Appareil de nettoyage d'éléments de machines de transformer des matières plastiques sur lesquels adhèrent des restes de matière plastique, comprenant un récipient de traitement (1) qui reçoit les éléments dans une chambre de traitement et qui est pourvu d'un couvercle (2) portant un filtre d'air d'évacuation à charbon actif (4) communiquant avec l'intérieur du récipient (1), d'un moyen de chauffage (3) qui chauffe un liquide caloporteur dans la chambre de traitement à une température supérieure à la température de fusion de la matière plastique adhérant sur les éléments à nettoyer, et d'un dispositif mettant en mouvement le liquide caloporteur,
**caractérisé** en ce que le dispositif consiste en une pompe (8a, 8b, 8c), dont le côté d'aspiration communique (en 6) avec la chambre de traitement à proximité du niveau de remplissage supérieur (F) du liquide caloporteur, et dont le côté de refoulement communique (en 7) avec la chambre de traitement à proximité du fond de cette dernière, et en ce qu'une conduite annulaire (11) est disposée dans le récipient (1) au-dessus du niveau de remplissage supérieur (F) du liquide caloporteur, conduite qui est pourvue de plusieurs trous (11a) tournés vers l'axe médian du récipient (1) et qui est reliée à une source de gaz inerte (14) par l'intermédiaire d'une valve (13).

2. Appareil selon la revendication 1, **caractérisé** en ce que la pompe est disposée dans une chambre de pompe tubulaire (5), dont l'axe s'étend parallèlement à l'axe médian de la chambre de traitement et qui communique avec la chambre de traitement par l'intermédiaire d'un conduit supérieur (6) et d'un conduit inférieur (7).

3. Appareil selon la revendication 1 ou 2, **caractérisé** en ce que l'organe de pompage de la pompe est une hélice (8a).

4. Appareil selon la revendication 3, **caractérisé** en ce que le moteur (8b) de la pompe est disposé à l'extérieur du récipient (1).

5. Appareil selon l'une des revendications 2 à 4, **caractérisé** en ce que l'isolation thermique (1c) du récipient (1) entoure également la chambre de pompe tubulaire (5).
